# EUROPÄISCHE PATENTANMELDUNG

(11) **EP 4 790 175 A1**
(43) Veröffentlichungstag der Anmeldung: **12.08.2026**
(21) Anmeldenummer: 25209606.0
(22) Anmeldetag: 17.10.2025
(51) Int. Cl.: D04B 21/16

(54) **SITZ MIT EINEM TRÄGER UND MIT EINEM BEZUG SOWIE BEZUG UND VERFAHREN ZUR HERSTELLUNG EINES BEZUGES**

(30) Priorität: 06.02.2025 DE 202025100602 U
(71) Anmelder: Riking Textil GmbH, 41061 Mönchengladbach (DE)
(72) Erfinder: RICHTER, Christoph, 41061 Mönchengladbach (DE); ENGELKING, Svenn, 58708 Menden (DE)
(74) Vertreter: Paul & Albrecht Patentanwälte PartG mbB

(57) **Zusammenfassung**

Die vorliegende Erfindung betrifft einen Sitz (1) mit einem Träger (8) und mit einem Bezug (2), wobei der Bezug (2) mindestens einen Bereich mit zwei Lagen aufweist, und der Bereich durch Verbindungen zwischen den zwei Lagen endet, wobei der Bezug (2) ein Gestrick ist, wobei mindestens ein Bereich des Bezuges (2) mit zwei Gestricklagen (C, D) als ein Polsterbereich (6, 27, 28, 29) ausgebildet ist, wobei die Verbindungen, an denen der Polsterbereich (6, 27, 28, 29) an seinen seitlichen Rändern endet, als erste Verbindungsstellen (20) an Strickreihen zwischen den zwei Gestricklagen (C, D) gestrickt sind, wobei der Bezug (2) im Polsterbereich (6, 27, 28, 29) zwischen den zwei Gestricklagen (C, D) mindestens einen zusätzlichen, während des Strickens zugeführten Füllfaden (21) aufweist und wobei der Füllfaden (21) an den ersten Verbindungsstellen (20) gehalten ist.

## Beschreibung

Die Erfindung betrifft einen Sitz mit einem Träger und mit einem Bezug sowie einen entsprechenden Bezug, wobei der Bezug mindestens einen Bereich mit zwei Lagen aufweist, der durch Verbindungen zwischen den zwei Lagen endet und wobei der Bezug ein Gestrick ist. Ferner betrifft die Erfindung ein Verfahren zur Herstellung eines entsprechenden Bezugs.

Aus der EP 3 792 107 B1 ist eine Sitzverkleidung für einen Fahrzeugsitz bekannt, die einen dreidimensional gestrickten Verkleidungskörper umfasst. Die Sitzverkleidung weist zumindest ein in den Verkleidungskörper integriertes funktionelles Element auf. Der Verkleidungskörper ist ein Abstandsgestrick, das sich aus zwei beabstandet zueinander angeordneten Gestricklagen zusammensetzt, wobei zwischen den Gestricklagen zumindest ein Abstandshalter vorgesehen ist. Innerhalb eines zwischen den Gestricklagen vorgesehenen Hohlraums ist zumindest ein zusätzliches funktionelles Element oder Bauteil, insbesondere ein Heizelement, ein Sensor oder ein Kabel, eingefasst. Die Sitzverkleidung der EP 3 792 107 B1 umhüllt den Fahrzeugsitz. Sie ist zusätzlich zu einem Bezug mit Polsterbereichen vorgesehen. Das in der EP 3 792 107 B1 beschriebene 3D-Strickverfahren ist ein Flatknitting Verfahren bzw. Flachstrickverfahren.

Die EP 1 752 573 B1 beschreibt einen Sitz, insbesondere einen Fahrgastsitz mit einer Rückenlehne, ein Sitzteil sowie einem Traggestell. Rückenlehne und Sitzteil umfassen einen als eine Polsterung bezeichneten Bezug. Die Polsterung umfasst eine Schicht, die durch eine Textilfläche gebildet ist. Die Textilfläche ist zumindest bereichsweise durch ein Abstandsgestrick aus zumindest zwei voneinander distanzierten Lagen und sich dazwischen erstreckenden Polfäden gebildet. Die Polfäden distanzieren die beiden Lagen der Textilfläche zur Herstellung von flächigen 2 ½ und/oder 3-dimensionalen Strukturen der Textilfläche. Die Textilfläche ist mit einer parallel zu dieser ausgerichteten Vorspannkraft zumindest teilweise mit einem Tragrahmen des Traggestells verbunden. Die Textilfläche weist am äußeren Umfang zumindest teilweise Strickränder auf. An der Textilfläche ist an der von einem Benutzer abgewandten Seite zumindest bereichsweise ein Schaumstoffelement von der Textilfläche in senkrechter Richtung dazu distanziert angeordnet. Das Schaumstoffelement der Polsterung der EP 1 752 573 B1 ist in einer Alternative außen, distanziert von dem Abstandsgestrick und in einer anderen Alternative zwischen zwei Schichten von Textilflächen angeordnet. In einer Alternative ist zwischen den Lagen der Textilfläche zumindest ein Aufnahmeraum ausgebildet, welcher zur Aufnahme mindestens eines Funktionselementes ausgebildet ist. Als Funktionsraum kann ein Luftpolster Verwendung finden. Das Luftpolster ist mit Hilfe von Regelorganen in seiner Härte veränderbar. In diesem Bereich unterbleibt die Anordnung von Polfäden.

Aus der DE 10 2013 100 597 A1 ist ein Bezugsstoff für einen Sitz bekannt, der zur Befestigung an einem als Rahmen bezeichneten Träger mit einer Kederverbindung versehen ist. Der Bezugsstoff ist einlagig oder mehrlagig ausgeführt und weist mindestens einen streifenförmigen, einlagigen oder zweilagigen, abgesetzten Übergangsbereich, einen schlauchförmigen zweilagigen Aufnahmebereich für eine Kederseele und einen Abschlussbereich auf. Der Bezugsstoff ist ein Gewebe, Gewirk oder Gestrick. Die zweilagigen Bereiche enden durch Lagentausch der Schussfäden.

In der DE 10 2019 121 587 A1 ist ein Sitzmöbel mit einem Bezug beschrieben, der als Formmaschenware ausgebildet ist und eine Vielzahl von nebeneinanderliegenden Zungentaschen aufweist. Bei dem Bezug handelt es sich um ein doppelflächiges Flächengebilde mit einer Deckschicht und mit einer Tragschicht. In einem freitragenden Bereich der Rückenlehne ist zwischen der Deckschicht und der Tragschicht eine Füllung in Form eines sich kräuselnden Fadens eingefügt. Das Einfügen einer Füllung in das Flächengebilde ist aufwendig.

Gegenstand der DE 202 15 446 U1 ist ein auf einer Flachstrickmaschine hergestelltes Gestrick mit einem Lederfaden. Dabei ist vorgesehen, in das Gestrick einen Lederfaden derart einzustricken, dass der Lederfaden zumindest teilweise, vorzugsweise größtenteils an der Sichtfläche des Gestricks geführt ist.

Aufgabe der Erfindung ist es einen Sitz, zum Beispiel für ein Fahrzeug, mit einem Träger und einem Bezug zu entwickeln, der mindestens ein Polster aufweist. Die Herstellung des Bezuges mit mindestens einem Polster soll gegenüber den bekannten Herstellungsverfahren vereinfacht sein.

Diese Aufgabe wird durch die folgenden Merkmale gelöst. Ein erfindungsgemäßer Sitz ist mit einem Träger und mit einem Bezug versehen. Der Bezug weist mindestens einen Bereich mit zwei Lagen auf. Der oder die Bereiche enden durch Verbindungen zwischen den zwei Lagen. Zur Lösung der Aufgabe ist der Bezug als ein Gestrick hergestellt. Mindestens ein Bereich des Bezuges mit zwei Gestricklagen ist als ein Polsterbereich ausgebildet. Die Verbindungen, an denen der Polsterbereich an seinen seitlichen Rändern endet, sind als erste Verbindungsstellen an Strickreihen zwischen den zwei Gestricklagen gestrickt. Der Bezug weist im Polsterbereich zwischen den zwei Gestricklagen mindestens einen zusätzlichen, während des Strickens zugeführten Füllfaden auf. Der Füllfaden ist an den ersten Verbindungsstellen gehalten.

Eine bevorzugte Ausführungsform ist dadurch gekennzeichnet, dass der Füllfaden im Polsterbereich ausschließlich an den ersten Verbindungsstellen gehalten ist. Eine bevorzugten Ausführungsform ist dadurch gekennzeichnet, dass sich der Füllfaden im Polsterbereich ausschließlich zwischen den zwei Gestricklagen erstreckt.

Der Füllfaden ist in seiner Menge und Art so gewählt, dass im Polsterbereich eine federnde Wirkung erzeugt wird. Die Anordnung von ersten Verbindungsstellen an den seitlichen Rändern des Polsterbereiches ermöglicht es, die Verbindungsstellen zum Halten des zusätzlichen Füllfadens zu verwenden. Der Füllfaden wird während des Strickens ohne weitere Maßnahmen im Polsterbereich angeordnet. Die Anordnung und Halterung der Füllfäden ermöglichen auf einfache Weise im Polsterbereich ein Polster zu bilden. Weiterer Vorteil ist, dass die Kontur des Polsterbereichs durch die ersten Verbindungsstellen an seinen Seiten präzise gefertigt ist. Ein erfindungsgemäßer Bezug mit zwei Gestricklagen, in dem mindestens ein Polsterbereich vorgesehen und damit ein Polster integriert ist, eignet sich als einziger Bezug für einen Träger eines Sitzes. Zusätzliche Polster sind nicht notwendig. Der Bezug wölbt sich im Polsterbereich durch den oder die Füllfäden nach außen und nimmt eine dreidimensionale Form an. Der Bezug ist dreidimensional gestrickt. Die beiden Gestricklagen sind je nach Musterung der Gestricklagen aus einem oder mehreren Grundgarnen vorzugsweise aus Wolle, Polyamid, Polyester oder deren Mischungen hergestellt. Das Garn des Füllfadens ist im Folgenden als Füllgarn bezeichnet. Das Füllgarn ist vorzugsweise aus Polyamid, Polyester oder anderen thermoplastischen Polymeren hergestellt. Ein Faden des Grundgarns besteht in einer Alternative aus einem Einzelfaden des Grundgarns. Der Füllfaden besteht in einer Alternative aus einem Einzelfaden des Füllgarns. Grundgarn und Füllgarn weisen jeweils eine Anzahl von Filamenten auf. In einer Alternative umfasst ein Faden des Grundgarns mehrere Einzelfäden des Grundgarns. In einer Alternative umfasst ein Füllfaden mehrere Einzelfäden des Füllgarns. Die Garnstärke des Grundgarns beträgt 22 dtex bis 5000 dtex, vorzugsweise 100 dtex bis 250 dtex, weiter bevorzugt 150 dtex bis 180 dtex. Die Anzahl der Filamente des Grundgarns beträgt f1 bis f1000, vorzugsweise f10 bis f500. Die Garnstärke des Füllgarns beträgt 35 dtex bis 10000 dtex, vorzugsweise 200 dtex bis 400 dtex. Die Anzahl der Filamente des Füllgarns beträgt f1 bis f1000, vorzugsweise f36 bis f300. In einer Alternative sind Grundgarn und Füllgarn gleich. In einer Alternative umfasst ein Füllfaden mehr Einzelfäden als ein Faden des Grundgarns. In einer Alternative ist die Garnstärke des Füllgarns um z. B. 100 dtex bis 200 dtex höher als die Garnstärke des Grundgarns. In einer Alternative ist die Garnstärke des Füllgarns etwa doppelt so hoch wie die des Grundgarns.

In einer Ausführungsform sind Verbindungen des Polsterbereiches, an denen der Polsterbereich an seinen oberen und unteren Rändern endet, als zweite Verbindungsstellen an Strickreihen zwischen den zwei Gestricklagen ausgebildet. Dies ermöglicht eine präzise, der gewünschten Kontur entsprechende Herstellung des Polsterbereichs. Die zweiten Verbindungsstellen bilden zusätzlich eine obere und untere Begrenzung für die Füllfäden. Dadurch wird die Haltbarkeit des im Polsterbereich gebildeten Polsters erhöht.

In einer Ausführungsform besteht der Füllfaden aus einem bei einer Wärmebehandlung um 2% bis 80%, schrumpfenden Garn, wobei der Füllfaden im Polsterbereich des Bezuges geschrumpft ist. Die Wärmebehandlung erfolgt bei einer Temperatur von 70°C bis 200°C, ggf. mit erhöhter Feuchtigkeit. Vorzugsweise besteht das als Füllgarn bezeichnete Garn aus einem bei einer Wärmebehandlung, z. B. von 80°C, um 10% bis 60% schrumpfenden Garn. Eine bevorzugte Ausführungsform ist dadurch gekennzeichnet, dass der Füllfaden aus einem bei einer Wärmebehandlung um 10% bis 80%, vorzugsweise um 20% bis 80%, schrumpfenden Garn besteht und der Füllfaden im Polsterbereich geschrumpft ist.

Durch eine Wärme- oder Dampfbehandlung des Bezuges nach dem Stricken, schrumpft der oder schrumpfen die Füllfäden im Polsterbereich, d. h. sie ziehen sich zusammen. Die geschrumpften Füllfäden sind durch ihren größeren Durchmesser dichter angeordnet. Die federnde Wirkung im Polsterbereich ist erhöht. Dies führt zu einem verbesserten Polster. In einer Ausführungsform weist die dem Benutzer zugewandte Gestricklage des Bezuges im Polsterbereich im Vergleich zu der dem Benutzer abgewandten Gestricklage eine höhere Elastizität auf. Eine höhere Elastizität der Gestricklage ist durch eine geringere Fadenspannung des der Gestricklage zugeführten Fadens aus Grundgarn einstellbar. Eine geringere Fadenspannung führt zu einer Erhöhung der Maschengröße. Alternativ oder zusätzlich ist eine höhere Elastizität durch Konfiguration größerer Maschen der Strickmaschine einstellbar. Die höhere Elastizität führt dazu, dass sich die Gestricklage im Polsterbereich dem Benutzer entgegen wölbt. Im Polsterbereich nimmt der Bezug eine kissenartige Kontur an und bildet das Polster.

In einer Ausführungsform weist der Bezug im Polsterbereich mindestens einen zusätzlichen, während des Strickens zugeführten Abstandsfaden aus einem im Folgenden als Abstandsgarn bezeichneten Garn auf. Abstandsgarne sind zur Herstellung von Abstandstextilien, u.a. auch von Abstandsgestricken, bekannt. Der Abstandsfaden dient dazu, die beiden Gestricklagen des Bezuges in einem bestimmten Abstand zu halten. Der Einsatz mindestens eines Abstandsfadens führt im Polsterbereich des Bezuges zu einer Stabilisierung des gebildeten Polsters. Das Abstandsgarn ist vorzugsweise aus Polyamid, Polyester oder anderen thermoplastischen Polymeren hergestellt. Die Garnstärke des Abstandsgarn beträgt 20 dtex bis 2000 dtex, vorzugsweise 50 dtex bis 600 dtex. Die Anzahl der Filamente des Abstandsgarns beträgt f1 bis f500, vorzugsweise f25 bis f300. In einer Ausführungsform ist die dem Benutzer zugewandte Gestricklage des Bezuges zumindest im Polsterbereich mit abwaschbarem Garn gestrickt, d. h. das Grundgarn ist ein abwaschbares Garn. Die Herstellung von leicht zu reinigenden Flächen aus abwaschbarem Garn erleichtert die Pflege des Sitzes. Das abwaschbare Garn ist vorzugsweise aus Polyamid, Polyester, Polyurethan oder anderen thermoplastischen Polymeren und deren Mischungen hergestellt. Die Garnstärke beträgt 20 dtex bis 2000 dtex, vorzugsweise 50 dtex bis 600 dtex. Die Anzahl der Filamente beträgt f1 bis f500, vorzugsweise f1 bis f100. Eine bevorzugte Ausführungsform ist dadurch gekennzeichnet, dass die Anzahl der Filamente des abwaschbaren Garns f1 bis f300, vorzugsweise f1 bis f10 beträgt.

In einer Ausführungsform umfasst der Träger mindestens einen Rahmen, wobei der oder die Rahmen Rohre oder Profile aufweisen. Zu den Profilen gehören Vollprofile sowie, zum Beispiel, Kederleisten. Der Bezug ist mit den Rohren oder Profilen verbunden. In einer Ausführungsform sind durch die Rohre oder die Profile Befestigungselemente gebildet. In einer alternativen Ausführungsform sind die Profile als Kederleisten ausgebildet. Der Bezug ist durch eine Kederverbindung mit dem Träger verbunden. Dabei ist durch mindestens eine Kederseele ein Befestigungselement gebildet.

In einer Ausführungsform erstrecken sich die zwei Gestricklagen über die Vorderseite und Rückseite des Bezuges. Die zwei Gestricklagen sind an Rändern des Bezuges durch dritte Verbindungsstellen und/oder vierte Verbindungsstellen miteinander verbunden. Die zwei Gestricklagen sind in einem Beispiel durch die dritten Verbindungsstellen an seitlichen Rändern an ersten bzw. letzten Strickreihen miteinander verbunden. Die zwei Gestricklagen sind alternativ oder zusätzlich durch die vierten Verbindungsstellen an oberen und ggf. unteren Rändern des Bezuges an ersten und letzten Strickreihen miteinander verbunden. An den verbundenen Rändern des Bezuges sind die zwei Gestricklagen jeweils innerhalb mindestens eines Aufnahmebereiches frei von Verbindungsstellen gebildet. In dem oder in den Aufnahmebereichen ist mindestens ein Befestigungselement zur Befestigung des Bezuges an dem Träger angeordnet. In einer Ausführungsform ist der Bezug als ein Stück gestrickt. Der gesamte Bezug ist in einem Strickprozess, z. B. auf einer Flachstrickmaschine mit zwei Nadelbetten, gestrickt. Der Bezug weist eine Montageöffnung auf der dem Benutzer abgewandten Seite auf. Die Montageöffnung ermöglicht das Einbringen der Befestigungselemente in die entsprechenden Aufnahmebereiche des Bezuges. Die Ausbildung von Aufnahmebereichen für mindestens ein Befestigungselement ermöglicht eine einfache Befestigung des Bezuges am Träger. Die Montageöffnung ermöglicht ein Beziehen des Trägers mit dem einstückigen Bezug ohne weitere Maßnahmen, insbesondere ohne dass eine Naht anzubringen ist. In einer Ausführungsform ist der Aufnahmebereich durch weitere Verbindungsstellen am inneren Ende des Aufnahmebereichs schlauchförmig ausgebildet. In einer Ausführungsform weist der Bezug mindestens einen Polsterbereich in einem Lehnenabschnitt des Sitzes auf, insbesondere in einem Kopfabschnitt des Lehnenabschnitts. Zusätzlich oder alternativ weist der Bezug mindestens einen Polsterbereich in einem Rückenabschnitt des Lehnenabschnitts des Sitzes oder in einem Sitzabschnitt des Sitzes auf. In einer Ausführungsform weist der Bezug in mindestens einem Abschnitt des Sitzes zwei Polsterbereiche nebeneinander auf. Vorteil des erfindungsgemäßen Sitzes ist, dass entsprechend einer gewünschten Sitzkontur an jeder beliebigen Stelle des Sitzes im Bezug ein Polsterbereich vorgesehen ist. In einer Ausführungsform weist der Bezug eine Struktur zum Beispiel ein Muster mit weiteren Verbindungsstellen auf.

Merkmale eines Verfahrens zur Herstellung eines Bezuges für einen erfindungsgemäßen Sitz sowie Merkmale eines erfindungsgemäßen Bezuges korrespondieren mit denen des erfindungsgemäßen Sitzes und weisen korrespondierende Vorteile auf. Bei einem erfindungsgemäßen Verfahren wird ein Bezug für einen Sitz hergestellt, der mindestens einen Bereich mit zwei Lagen aufweist. Der Bereich endet durch Verbindungen zwischen den zwei Lagen. Der Bezug ist als ein Gestrick hergestellt. Erfindungsgemäß werden zwei Gestricklagen gestrickt, wobei mindestens ein Bereich mit den zwei Gestricklagen als ein Polsterbereich ausgebildet wird. Die Verbindungen, an denen der Polsterbereich an seinen seitlichen Rändern endet, werden als erste Verbindungsstellen an Strickreihen zwischen den zwei Gestricklagen gestrickt. Gestrickt heißt, die Verbindungen werden beim Stricken erzeugt. Während des Strickens wird im Polsterbereich zwischen den zwei Gestricklagen mindestens ein zusätzlicher Füllfaden zugeführt. Der Füllfaden wird an den ersten Verbindungsstellen gehalten.

Eine bevorzugte Ausführungsform ist dadurch gekennzeichnet, dass der Füllfaden im Polsterbereich ausschließlich an den ersten Verbindungsstellen gehalten ist. Eine bevorzugten Ausführungsform ist dadurch gekennzeichnet, dass sich der Füllfaden im Polsterbereich ausschließlich zwischen den zwei Gestricklagen erstreckt.

Weitere Verfahrensmerkmale sind in der Beschreibung der Ausführungsbeispiele erläutert.

Die Erfindung wird anhand der Zeichnung, in der Ausführungsbeispiele schematisch dargestellt sind, weiter erläutert. Es zeigen:
- Figur 1: eine perspektivische Darstellung eines erfindungsgemäßen Sitzes mit einem Bezug eines ersten Ausführungsbeispiels mit Schnittlinien A und B;
- Figur 2: eine perspektivische Darstellung eines Trägers des Sitzes;
- Figur 3: eine Vorderansicht des Bezuges im Lehnenabschnitt des Sitzes mit Schnittlinien A und B;
- Figur 4: Querschnitte A und B durch den Sitz gemäß Figur 3;
- Figur 5: eine Vorderansicht eines Bezuges im Lehnenabschnitt des Sitzes mit Schnittlinien A und B eines zweiten Ausführungsbeispiels;
- Figur 6: Querschnitte A und B durch den Sitz gemäß Figur 5;
- Figur 7: eine Vorderansicht eines Bezuges im Lehnenabschnitt des Sitzes mit Schnittlinien A und B eines dritten Ausführungsbeispiels;
- Figur 8: Querschnitte A und B durch den Sitz gemäß Figur 7;
- Figur 9: eine Vorderansicht eines Bezuges im Lehnenabschnitt des Sitzes mit Schnittlinien A und B eines vierten Ausführungsbeispiels und
- Figur 10: Querschnitte A und B durch den Sitz gemäß Figur 9.

Die Figuren zeigen, dass die Schnittlinien A und B horizontale Schnittlinien und entsprechend die Querschnitt A und B horizontale Querschnitte sind.

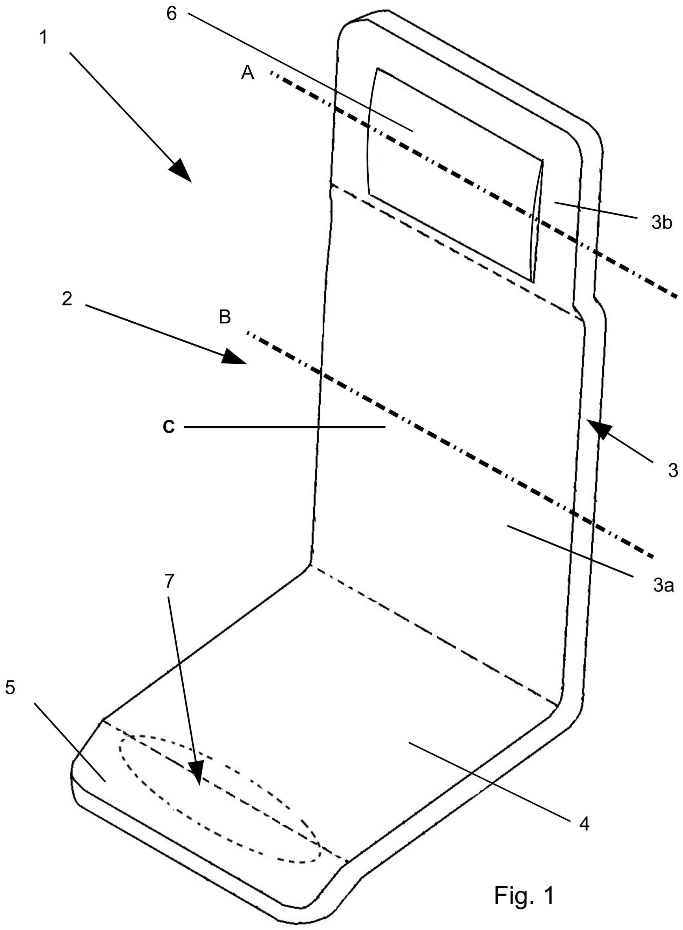

Figur 1 zeigt eine perspektivische Darstellung eines erfindungsgemäßen Sitzes 1 mit einem Bezug 2, dessen Vorderseite zu sehen ist. Der Sitz 1 umfasst einen Lehnenabschnitt 3 mit einem Rückenabschnitt 3a und einem Kopfteil 3b, einen Sitzabschnitt 4 und einen Beinabschnitt 5. In Figur 1 eingezeichnete, gestrichelte Querlinien grenzen schematisch die Abschnitte des Sitzes 1 und damit des Bezuges 2 voneinander ab. Der Sitzabschnitt 4 verläuft in etwa senkrecht zu dem Rückenabschnitt 3. Der Beinabschnitt 5 ist im eingebauten Zustand zum Sitzabschnitt 4 etwas nach unten geneigt. Der Bezug 2 ist dreidimensional gestrickt. Der Bezug 2 weist zwei Gestricklagen C und D mit einem Polsterbereich 6 auf. Die zwei Gestricklagen C, D erstrecken sich über die Vorderseite und die Rückseite des Bezuges 2. In Figur 1 ist im Wesentlichen die vordere Gestricklage C zu sehen. Der Polsterbereich 6 des Bezuges 2 ist im Rückenabschnitt 3 des Sitzes 1, und zwar in dessen Kopfabschnitt 3b, ausgebildet. Der Bezug 2 weist in seiner hinteren Gestricklage D eine Montageöffnung 7 auf, die durch eine gestrichelte Linie schematisch gezeigt ist. Eine Schnittlinie A befindet sich auf der Höhe des Polsterbereichs 6 des Bezuges 2 im Kopfabschnitt 3b des Sitzes 1. Eine Schnittlinie B befindet sich unterhalb des Polsterbereichs 6 im Bereich des Rückenabschnitts 3a des Sitzes 1.

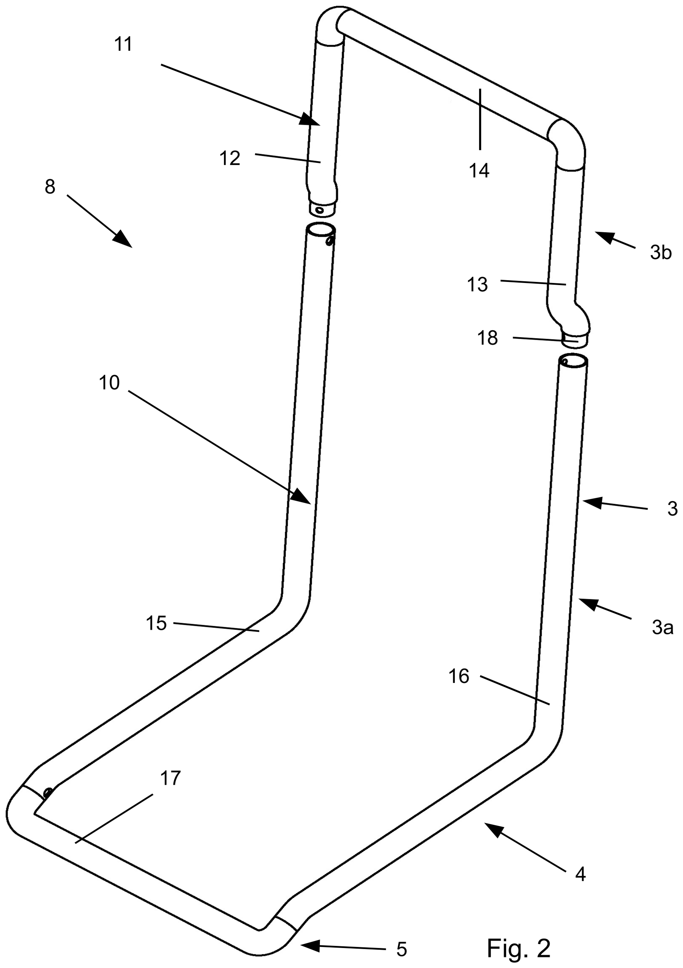

Figur 2 zeigt einen Träger 8 des ersten Ausführungsbeispiels. Der Träger 8 umfasst einen unteren Rahmen 10 und einen oberen Rahmen 11, wobei der obere Rahmen 11 im Kopfabschnitt 3b des Sitzes 1 ausgebildet ist. Der obere Rahmen 11 ist durch zwei seitliche Rohre 12, 13 und ein oberes Rohr 14 gebildet. Die seitlichen Rohre 12, 13 sind mit dem oberen Rohr 14 verbunden. Der untere Rahmen 10 ist durch zwei seitliche Rohre 15, 16 und ein unteres Rohr 17 gebildet. Die seitlichen Rohre 15, 16 sind entsprechend der Form des Sitzes 1 geformt und mit dem unteren Rohr 17 verbunden. Der obere Rahmen 11 ist von dem unteren Rahmen 10 lösbar ausgebildet. Dazu sind an den unteren Enden der seitlichen Rohre 12, 13 Verbindungszapfen 18 zur Verbindung mit den seitlichen Rohren 15, 16 des unteren Rahmens 10 geformt. Durch die Rohre 12 bis 17 sind Befestigungselemente für den Bezug 2 gebildet.

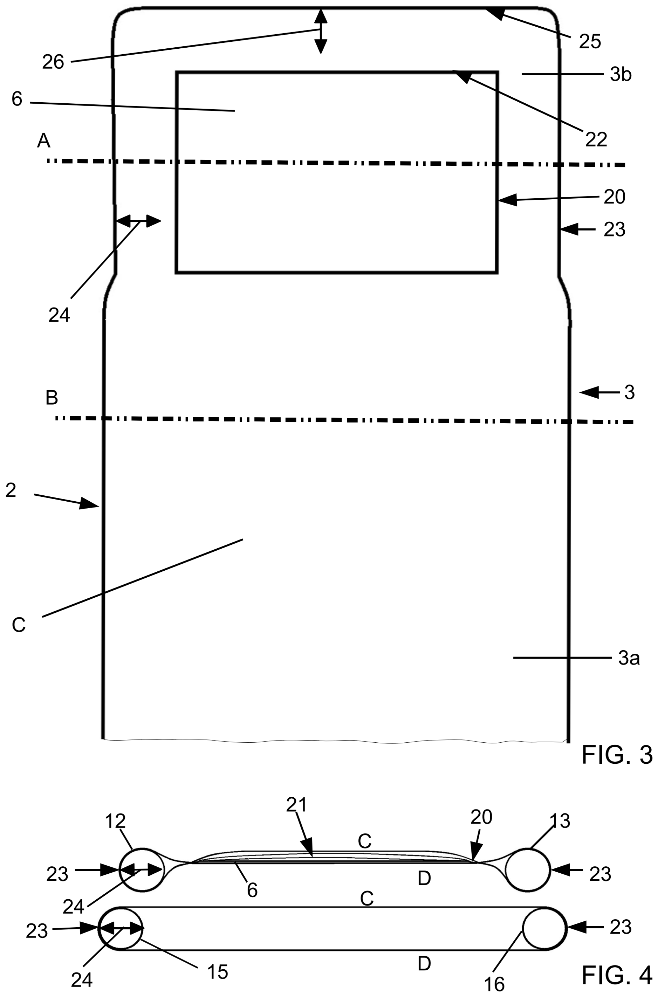

Figur 3 zeigt eine Vorderansicht des Lehnenabschnitts 3 des Sitzes 1 mit den Schnittlinien A und B. Entsprechende Querschnitte A und B durch den Kopfabschnitt 3b mit dem Polsterbereich 6 und den Rückenabschnitt 3a des Lehnenabschnitts 3 gemäß der Schnittlinien A und B der Figur 3 sind in Figur 4 schematisch dargestellt. Die beiden Gestricklagen C, D sind durch erste Verbindungsstellen 20 an Strickreihen miteinander verbunden. Die Strickreihen, an denen die beiden Gestricklagen C, D miteinander verbunden sind, sind Strickreihen der beiden Gestricklagen C, D auf gleicher Höhe des Bezugs 2, die ggf. gleichzeitig gestrickt sind. Eine erste Verbindungsstelle 20 ist zum Beispiel durch eine gestrickte Masche eines Fadens des Grundgarns einer der Gestricklagen C und D in der entsprechenden Reihe auf der anderen Gestricklage D bzw. C gebildet. Wesentlich ist, dass der Faden der ersten Gestricklage C, D sich von dieser zur anderen Gestricklage C, D erstreckt und an dieser arretiert ist. Die erste Verbindungsstelle 20 kann zum Beispiel durch Bildung einer Masche, eines Henkels oder durch Wechsel des Grundgarns gebildet sein. Beim Wechsel des Grundgarns wird eine Verkreuzung der beiden Stricklagen erzeugt. Die ersten Verbindungsstellen 20 sind an den seitlichen Rändern des Polsterbereichs 6 des Bezuges 2 gebildet. Im Polsterbereich 6 des Bezuges 2 ist zwischen den beiden Gestricklagen C, D mindestens ein zusätzlicher Füllfaden 21 angeordnet. Der Füllfaden 21 ist während des Strickens zugeführt. Der Füllfaden 21 ist an den ersten Verbindungsstellen 20 an den seitlichen Rändern des Polsterbereichs 6 gehalten. Der Füllfaden 21 erstreckt sich im Polsterbereich 6 zwischen den ersten Verbindungsstellen 20 hin und her, und damit zwischen den seitlichen Rändern des Polsterbereichs 6. Vorzugsweise ist in allen Strickreihen innerhalb des Polsterbereichs 6 mindestens ein Füllfaden zugeführt. Durch den Füllfaden 21 ist im Polsterbereich 6 der Raum zwischen den beiden Gestricklagen C, D dicht mit zusätzlichen Fäden gefüllt. Ein Füllfaden 21 besteht in diesem Ausführungsbeispiel aus drei Einzelfäden des Füllgarns, wobei die drei Einzelfäden in Figur 4 nebeneinander zu sehen sind.

Die beiden Gestricklagen C, D des Bezuges 2 sind durch zweite Verbindungsstellen 22 an Strickreihen miteinander verbunden. Die zweiten Verbindungsstellen 22 sind an den unteren und oberen Rändern des Polsterbereichs 6 gestrickt. Eine zweite Verbindungsstelle 22 ist z. B., wie eine erste Verbindungsstelle 20, durch eine Masche oder einen Henkel einer Gestricklage C, D gebildet, die auf der anderen Gestricklage D, C gestrickt ist. Die beiden Gestricklagen C, D des Bezuges 2 sind an ihren seitlichen Rändern durch dritte Verbindungsstellen 23 an Enden von Strickreihen miteinander verbunden. Die beiden Gestricklagen C, D sind innerhalb eines seitlichen Aufnahmebereiches 24 zu den dritten Verbindungsstellen 23 frei von Verbindungsstellen gestrickt. In dem oder den seitlichen Aufnahmebereichen 24 sind Befestigungselemente, und zwar die seitlichen Rohr 12, 13, 15, 16 des Trägers 8, angeordnet. Eine dritte Verbindungsstelle 23 ist z. B. durch Kreuzen oder Maschenbildung der den beiden Gesticklage C, D zugeführten Fäden des Grundgarns gebildet. Die beiden Gestricklagen C, D sind am oberen Rand und am unteren Rand des Bezuges 2 durch vierte Verbindungsstellen 25 an Strickreihen am oberen und unteren Ende des Bezuges 2 miteinander verbunden. Die beiden Gestricklagen C, D sind innerhalb eines oberen und unteren Aufnahmebereiches 26 zu den vierten Verbindungsstellen 25 ohne Verbindungsstellen gestrickt. In den Aufnahmebereichen 26 sind Befestigungselemente, und zwar das obere Rohr 14 und/oder das untere Rohr 17 des Trägers 8 angeordnet. Eine vierte Verbindungsstelle 25 ist eine Verbindung der zwei Gestricklagen C, D, zum Beispiel durch gemeinsames Stricken der Maschen und Abketten bzw. gebildet durch Ausgangsmaschen für eine doppelte Maschenaufnahme. Die Breite der Aufnahmebereiche 24, 26 entspricht mindestens dem Durchmesser der entsprechenden Rohre 12 bis 17.

In diesem Ausführungsbeispiel sind die Gestricklagen C, D mit gleichem Grundgarn gestrickt. Das Grundgarn ist aus PES mit einer Garnstärke z. B. von ca. 170 dtex mit ca. 48 Filamente hergestellt. Das Füllgarn ist ebenfalls aus PES hergestellt. Es weist eine Garnstärke z. B. von ca. 340 dtex mit ca. 288 Filamenten auf. Der oder die Füllfäden des Füllgarns sind nach einer Dampfbehandlung bei ca. 80°C zu 50% geschrumpft. Die dem Benutzer zugewandte Gestricklage C des Bezuges 2 weist im Polsterbereich 6 im Vergleich zu der dem Benutzer abgewandten Gestricklage D eine höhere Elastizität auf. Eine höhere Elastizität der Gestricklage C im Polsterbereich 6 wird durch eine geringere Fadenspannung des die Gestricklage C strickenden Fadens des Grundgarns im Vergleich zur Fadenspannung des die Gestricklage D strickenden Fadens eingestellt. Die Gestricklage C wölbt sich im Polsterbereich 6 nach außen und bildet das integrierte Polster. Der Bezug ist dreidimensional gestrickt.

Der Bezug 2 des ersten Ausführungsbeispiels ist als ein Stück gestrickt. Die Gestricklage C bildet das Vorderteil des Bezuges und die Gestricklage D das Hinterteil. Die beiden Gestricklagen C, D sind an den Rändern des Posterbereichs 6 durch die ersten Verbindungsstellen 20 und die zweiten Verbindungsstellen 22 miteinander verbunden. Die beiden Gestricklagen C, D sind an den Seiten durch die dritten Verbindungsstellen 23 und an ihren oberen und unteren Enden durch die vierten Verbindungsstellen 25 miteinander verbunden. Für diesen Träger 8 mit einem oberen und unteren Rahmen 11, 10 aus Rohren 12 bis 17 ist der Bezug 2 mit einer breiten Montageöffnung 7 in der Gestricklage D auf der dem Benutzer abgewandten Seite versehen. Die Breite der Montageöffnung 7 beträgt mindestens 75% der Breite des Sitzes 1. Die Montageöffnung 7 ermöglicht ein Beziehen des Trägers 1 mit dem einstückigen Bezug 2. Dazu wird der Bezug 2 insgesamt zunächst auf die Rohre 12, 14, 13 des oberen Rahmens 11 des Trägers 1 gezogen. Die Rohre 12, 13 werden mit Hilfe der Verbindungszapfen 18 auf die Rohre 15, 16, des unteren Rahmens 10 des Trägers 1 gesteckt. Anschließend wird der Bezug mit Hilfe der Montageöffnung 7 über die Rohre 15, 16 und 17 des Trägers 1 gezogen.

Bei einem erfindungsgemäßen Verfahren wird ein Bezug 2 für einen erfindungsgemäßen Sitz 1 mit mindestens einem Bereich mit zwei Lagen hergestellt. Der Bereich endet durch Verbindungen zwischen den zwei Lagen. Erfindungsgemäß ist der Bezug 2 als ein Gestrick hergestellt. Es werden zwei Gestricklagen C, D gestrickt, wobei mindestens ein Bereich mit den zwei Gestricklagen als ein Polsterbereich 6 ausgebildet wird. Die Verbindungen, an denen der Polsterbereich 6 an seinen seitlichen Rändern endet, werden als erste Verbindungsstellen 20 an Strickreihen zwischen den zwei Gestricklagen gestrickt. Während des Strickens wird im Polsterbereich 6 zwischen den zwei Gestricklagen C, D mindestens ein zusätzlicher Füllfaden 21 zugeführt. Der Füllfaden 21 wird an den ersten Verbindungsstellen 20 gehalten. Die beiden Gestricklagen C, D des Bezuges 2 werden zum Beispiel gleichzeitig auf einer Flachstrickmaschine mit zwei Nadelbetten, wie einem vorderen Nadelbett z. B. für die vordere Gestricklage C und einem hinteren Nadelbett für die hintere Gestricklage D, gefertigt. Eine erste Verbindungsstelle 20 wird innerhalb Strickreihen durch Stricken einer Masche einer der auf den beiden Nadelbetten aufeinander folgenden Strickreihen auf dem anderen Nadelbett hergestellt. Mindestens ein in einem separaten Fadenführer mitgeführter Füllfaden 21 wird an der ersten Verbindungsstelle 20 gehalten, wenn die nächste Strickreihe gestrickt wird. In einem Beispiel wird während des Strickens der beiden Gestricklagen C, D ein Fadenführer für den Füllfaden 21 mitgeführt. Dieser Fadenführer wird im Polsterbereich 6 in Strickrichtung jeweils bis etwas über die Verbindungsstellen 20 hinaus vor den Fadenführern der beiden Gestricklagen C, D geführt. Dadurch wird der Füllfaden 21 in jeder Strickreihe an den anschließend gestrickten Verbindungstellen 20 arretiert. Die Verbindungen, an denen der Polsterbereich an seinen oberen und unteren Rändern endet, werden als zweite Verbindungsstellen 22 an Strickreihen zwischen den zwei Gestricklagen C, D ausgebildet. Die dem Benutzer zugewandte Gestricklage C des Bezuges im Polsterbereich 6 wird im Vergleich zu der dem Benutzer abgewandten Gestricklage D mit einer höheren Elastizität gestrickt. Die zwei Gestricklagen C, D erstrecken sich über die Vorderseite und Rückseite des Bezuges. Die zwei Gestricklagen werden an Rändern des Bezuges 2 durch dritte Verbindungsstellen 23 und/oder vierte Verbindungsstellen 25 miteinander verbunden. An den Rändern des Bezuges 2 werden die zwei Gestricklagen C, D jeweils innerhalb mindestens eines Aufnahmebereiches 24, 26 frei von Verbindungsstellen gebildet. Der Bezug wird als ein Stück mit einer Montageöffnung 7 auf der dem Benutzer abgewandten Seite gestrickt. Nach dem Stricken wird der Bezug 2 mit einem Dampf bei ca. 80°C behandelt. Der Füllfaden schrumpft auf ca. 50% und bildet das Polster im Polsterbereich stärker aus. Zur Herstellung des Sitzes wird der gestrickte und gedämpfte Bezug 2 durch die Montageöffnung 7 zunächst auf den oberen Rahmen 11 und anschließend auf den unteren Rahmen 10 gezogen. In einer Alternative ist zur Erhöhung der Elastizität die Maschengröße der Gestricklage C im Polsterbereich 6 erhöht. In einer Alternative ist die dem Benutzer zugewandte Gestricklage C des Bezuges 2 zumindest im Polsterbereich 6 mit abwaschbarem Garn gestrickt.

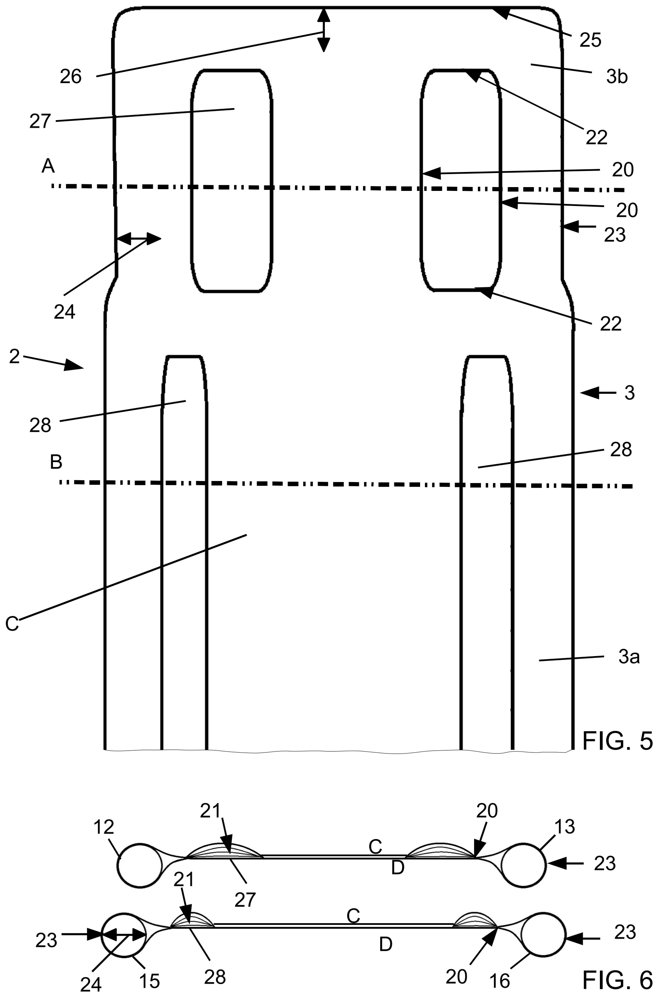

Ein zweites Ausführungsbeispiel, das in den Figuren 5 und 6 gezeigt ist, entspricht dem ersten Ausführungsbeispiel bis auf die folgenden Merkmale. Im Kopfabschnitt 3b des Sitzes 1 sind zwei längliche Polsterbereiche 27 und im Rückenabschnitt 3a zwei weitere längliche Polsterbereiche 28 vorgesehen.

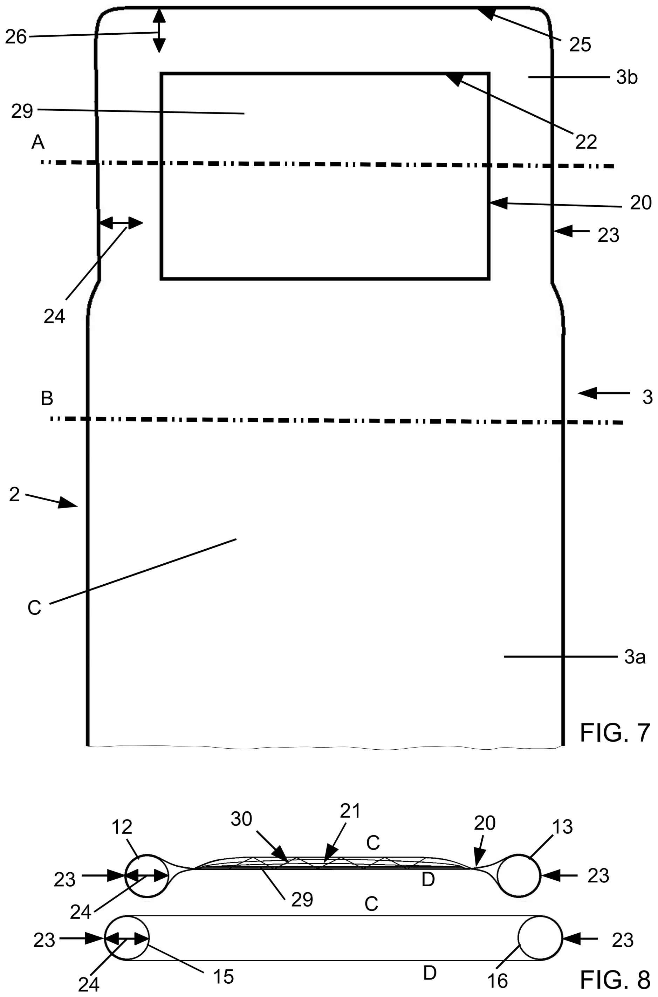

Ein drittes Ausführungsbeispiel, das in den Figuren 7 und 8 gezeigt ist, entspricht dem ersten Ausführungsbeispiel bis auf die folgenden Merkmale. Der Bezug 2 weist im Polsterbereich 29 im Kopfabschnitt 3b des Sitzes 1 mindestens einen zusätzlichen, während des Strickens zugeführten Abstandsfaden 30 auf. Bei der Herstellung des Bezuges 2 wird im Polsterbereich 29 während des Strickens zusätzlich zu dem Füllfaden 21 mindestens ein Abstandsfaden 30 zugeführt.

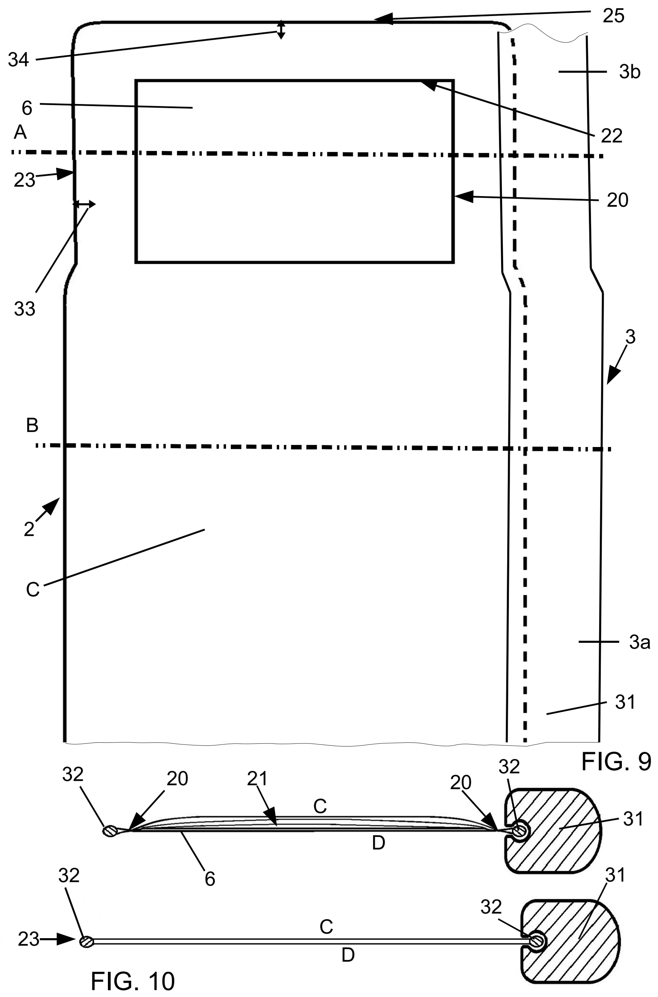

In einem vierten Ausführungsbeispiel, das in den Figuren 9 und 10 gezeigt ist, entspricht dem ersten Ausführungsbeispiel bis auf die folgenden Merkmale. Der Bezug 2 ist durch eine Kederverbindung mit dem Träger verbunden. Der Träger weist einen Rahmen mit Kederleisten 31 auf. Eine Kederleiste 31 ist auf der rechten Seite der Figuren 9 und 10 angedeutet. Ein Befestigungselement für den Bezug 2 ist durch mindestens eine entsprechende, Kederseele 32 gebildet. Die Kederseele 32 ist in den Aufnahmebereichen 24, 26 des Bezuges 2 angeordnet. Die Breite der Aufnahmebereiche 24, 26 beträgt mindestens der Breite der Kederseele 32. Im verbundenen Zustand ist die Kederseele 32 mit dem Bezug 2 in den Kederleisten 31 des Trägers 8 angeordnet.

### Bezugszeichenliste

- 1: Sitz
- 2: Bezug
- 3: Lehnenabschnitt des Sitzes 1
- 3a: Rückenabschnitt
- 3b: Kopfabschnitt
- 4: Sitzabschnitt des Sitzes
- 5: Beinabschnitt des Sitzes
- 6: Polsterbereich
- 7: Montageöffnung des Bezuges
- 8: Träger
- 10: unterer Rahmen
- 11: oberer Rahmen
- 12: seitliches Rohr des oberen Rahmens 11
- 13: seitliches Rohr des oberen Rahmens 11
- 14: oberes Rohr des oberen Rahmens 11
- 15: seitliches Rohr des unteren Rahmens 10
- 16: seitliches Rohr des unteren Rahmens 10
- 17: unteres Rohr des unteren Rahmens 10
- 18: Verbindungszapfen
- 20: erste Verbindungsstelle
- 21: Füllfaden
- 22: zweite Verbindungsstelle
- 23: dritte Verbindungsstelle
- 24: Aufnahmebereich
- 25: vierte Verbindungsstelle
- 26: Aufnahmebereich
- 27: Polsterbereich
- 28: Polsterbereich
- 29: Polsterbereich
- 30: Abstandsfaden
- 31: Kederleiste
- 32: Kederseele
- 33: seitlicher Abstandsbereich
- 34: oberer Abstandbereich

- A.: Schnittlinie eines horizontalen Schnittes durch den Lehnenabschnitt des Sitzes im Polsterbereich
- B.: Schnittlinie eines horizontalen Schnittes durch den Lehnenabschnitt des Sitzes unterhalb des Polsterbereichs
- C.: vordere Gestricklage
- D.: hintere Gestricklage

## Patentansprüche

1. Sitz (1) mit einem Träger (8) und mit einem Bezug (2), wobei der Bezug (2) mindestens einen Bereich mit zwei Lagen aufweist, und der Bereich durch Verbindungen zwischen den zwei Lagen endet, **dadurch gekennzeichnet, dass** der Bezug (2) ein Gestrick ist, wobei mindestens ein Bereich des Bezuges (2) mit zwei Gestricklagen (C, D) als ein Polsterbereich (6, 27, 28, 29) ausgebildet ist, wobei die Verbindungen, an denen der Polsterbereich (6, 27, 28, 29) an seinen seitlichen Rändern endet, als erste Verbindungsstellen (20) an Strickreihen zwischen den zwei Gestricklagen (C, D) gestrickt sind, wobei der Bezug (2) im Polsterbereich (6, 27, 28, 29) zwischen den zwei Gestricklagen (C, D) mindestens einen zusätzlichen, während des Strickens zugeführten Füllfaden (21) aufweist und wobei der Füllfaden (21) an den ersten Verbindungsstellen (20) gehalten ist.

2. Sitz (1) nach Anspruch 1, **dadurch gekennzeichnet, dass** der Füllfaden (21) im Polsterbereich (6, 27, 28, 29) ausschließlich an den ersten Verbindungsstellen (20) gehalten ist, und/oder, dass sich der Füllfaden (21) im Polsterbereich (6, 27, 28, 29) ausschließlich zwischen den ersten Verbindungsstellen (20) erstreckt.

3. Sitz (1) nach Anspruch 1 oder 2, **dadurch gekennzeichnet, dass** Verbindungen, an denen der Polsterbereich (6, 27, 28, 29) an seinen oberen und unteren Rändern endet, als zweite Verbindungsstellen (22) an Strickreihen zwischen den zwei Gestricklagen (C, D) ausgebildet sind.

4. Sitz (1) nach Anspruch 1 bis 3, **dadurch gekennzeichnet, dass** der Füllfaden (21) aus einem bei einer Wärmebehandlung um 2% bis 80%, vorzugsweise um 20% bis 60% schrumpfenden Garn besteht und der Füllfaden (21) im Polsterbereich (6, 27, 28, 29) geschrumpft ist.

5. Sitz (1) nach Anspruch 1 bis 3, **dadurch gekennzeichnet, dass** der Füllfaden (21) aus einem bei einer Wärmebehandlung um 10% bis 80%, vorzugsweise um 20% bis 80% schrumpfenden Garn besteht und der Füllfaden (21) im Polsterbereich (6, 27, 28, 29) geschrumpft ist.

6. Sitz (1) nach einem der Ansprüche 1 bis 5, **dadurch gekennzeichnet, dass** die dem Benutzer zugewandte Gestricklage (C) des Bezuges (2) im Polsterbereich (6, 27, 28, 29) im Vergleich zu der dem Benutzer abgewandten Gestricklage (D) eine höhere Elastizität aufweist, und/oder, dass der Bezug (2) im Polsterbereich (6, 27, 28, 29) mindestens einen zusätzlichen, während des Strickens zugeführten Abstandsfaden (30) aufweist.

7. Sitz (1) nach einem der Ansprüche 1 bis 6, **dadurch gekennzeichnet, dass** die dem Benutzer zugewandte Gestricklage (C) des Bezuges (2) zumindest im Polsterbereich (6, 27, 28, 29) mit abwaschbarem Garn gestrickt ist, wobei insbesondere die Anzahl der Filamente des abwaschbaren Garns f1 bis f300, vorzugsweise f1 bis f10 beträgt.

8. Sitz (1) nach einem der Ansprüche 1 bis 7, **dadurch gekennzeichnet, dass** der Träger (8) des Sitzes (1) mindestens einen Rahmen umfasst, wobei der oder die Rahmen Rohre (12 - 17) oder Profile aufweist, mit denen der Bezug (2) verbunden ist.

9. Sitz (1) nach Anspruch 8, **dadurch gekennzeichnet, dass** durch die Rohre (12 - 17) oder die Profile Befestigungselemente gebildet sind.

10. Sitz (1) nach Anspruch 8, **dadurch gekennzeichnet, dass** die Profile als Kederleisten (31) ausgebildet sind und durch mindestens eine Kederseele (32) ein Befestigungselement gebildet ist.

11. Sitz (1) nach Anspruch 9 oder 10, **dadurch gekennzeichnet, dass** sich die zwei Gestricklagen (C, D) über die Vorderseite und Rückseite des Bezuges (2) erstrecken, wobei die zwei Gestricklagen (C, D) an Rändern des Bezuges (2) durch dritte Verbindungsstellen (23) und/oder vierte Verbindungsstellen (25) miteinander verbunden sind, wobei die zwei Gestricklagen (C, D) an den Rändern des Bezuges (2) jeweils innerhalb mindestens eines Aufnahmebereiches (24, 26) frei von Verbindungsstellen gebildet sind und wobei in dem oder den Aufnahmebereichen (24, 26) mindestens ein Befestigungselement zur Befestigung des Bezuges (2) an dem Träger (8) angeordnet ist.

12. Bezug (2) für einen erfindungsgemäßen Sitz (1), der mindestens einen Bereich mit zwei Lagen aufweist, wobei der Bereich durch Verbindungen zwischen den zwei Lagen endet, **dadurch gekennzeichnet, dass** der Bezug (2) ein Gestrick ist, wobei mindestens ein Bereich des Bezuges (2) mit zwei Gestricklagen (C, D) als ein Polsterbereich (6, 27, 28, 29) ausgebildet ist, wobei die Verbindungen, an denen der Polsterbereich (6, 27, 28, 29) an seinen seitlichen Rändern endet, als erste Verbindungsstellen (20) an Strickreihen zwischen den zwei Gestricklagen (C, D) gestrickt sind, wobei der Bezug (2) im Polsterbereich (6, 27, 28, 29) zwischen den zwei Gestricklagen (C, D) mindestens einen zusätzlichen, während des Strickens zugeführte Füllfaden (21) aufweist und wobei der Füllfaden (21) an den ersten Verbindungsstellen (20) gehalten ist.

13. Bezug (2) nach Anspruch 12, **dadurch gekennzeichnet, dass** der Füllfaden (21) im Polsterbereich (6, 27, 28, 29) ausschließlich an den ersten Verbindungsstellen (20) gehalten ist, und/oder, dass sich der Füllfaden (21) im Polsterbereich (6, 27, 28, 29) ausschließlich zwischen den ersten Verbindungsstellen (20) erstreckt.

14. Verfahren zur Herstellung eines Bezuges (2) für einen Sitz (1) der mindestens einen Bereich mit zwei Lagen aufweist, wobei der Bereich durch Verbindungen zwischen den zwei Lagen endet, **dadurch gekennzeichnet, dass** der Bezug (2) als ein Gestrick hergestellt wird, wobei zwei Gestricklagen (C,D) gestrickt werden, wobei mindestens ein Bereich mit den zwei Gestricklagen (C, D) als ein Polsterbereich (6, 27, 28, 29) ausgebildet wird, wobei die Verbindungen, an denen der Polsterbereich (6, 27, 28, 29) an seinen seitlichen Rändern endet, als erste Verbindungsstellen (20) an Strickreihen zwischen den zwei Gestricklagen (C, D) gestrickt werden, wobei während des Strickens im Polsterbereich (6, 27, 28, 29) zwischen den zwei Gestricklagen (C, D) mindestens ein zusätzlicher Füllfaden (21) zugeführt wird und wobei der Füllfaden (21) an den ersten Verbindungsstellen (20) gehalten wird.

15. Verfahren nach Anspruch 14, **dadurch gekennzeichnet, dass** der Füllfaden (21) im Polsterbereich (6, 27, 28, 29) ausschließlich an den ersten Verbindungsstellen (20) gehalten wird, und/oder, dass sich der Füllfaden (21) im Polsterbereich (6, 27, 28, 29) ausschließlich zwischen den ersten Verbindungsstellen (20) erstreckt.

## Geänderte Patentansprüche

### Geänderte Patentansprüche gemäss Regel 137(2) EPÜ.

1. Sitz (1) mit einem Träger (8) und mit einem Bezug (2), wobei der Bezug (2) mindestens einen Bereich mit zwei Lagen aufweist, und der Bereich durch Verbindungen zwischen den zwei Lagen endet, wobei der Bezug (2) ein Gestrick ist, wobei mindestens ein Bereich des Bezuges (2) mit zwei Gestricklagen (C, D) ausgebildet ist, wobei die Verbindungen, an denen der Bereich endet, als Verbindungsstellen an Strickreihen zwischen den zwei Gestricklagen (C, D) gestrickt sind, wobei der Bezug (2) in dem Bereich zwischen den zwei Gestricklagen (C, D) mindestens einen zusätzlichen Füllfaden (21) aufweist, **dadurch gekennzeichnet, dass** der Bereich als ein Polsterbereich (6, 27, 28, 29) ausgebildet ist, wobei die Verbindungsstellen, an denen der Polsterbereich (6, 27, 28, 29) an seinen seitlichen Rändern endet, als erste Verbindungsstellen (20) gestrickt sind, wobei der Bezug (2) im Polsterbereich (6, 27, 28, 29) den Füllfaden (21) aufweist, wobei der Füllfaden (21) während des Strickens zugeführt ist und an den ersten Verbindungsstellen (20) gehalten ist.

2. Sitz (1) nach Anspruch 1, **dadurch gekennzeichnet, dass** der Füllfaden (21) im Polsterbereich (6, 27, 28, 29) ausschließlich an den ersten Verbindungsstellen (20) gehalten ist, und/oder, dass sich der Füllfaden (21) im Polsterbereich (6, 27, 28, 29) ausschließlich zwischen den ersten Verbindungsstellen (20) erstreckt.

3. Sitz (1) nach Anspruch 1 oder 2, **dadurch gekennzeichnet, dass** Verbindungen, an denen der Polsterbereich (6, 27, 28, 29) an seinen oberen und unteren Rändern endet, als zweite Verbindungsstellen (22) an Strickreihen zwischen den zwei Gestricklagen (C, D) ausgebildet sind.

4. Sitz (1) nach Anspruch 1 bis 3, **dadurch gekennzeichnet, dass** der Füllfaden (21) aus einem bei einer Wärmebehandlung um 2% bis 80%, vorzugsweise um 20% bis 60% schrumpfenden Garn besteht und der Füllfaden (21) im Polsterbereich (6, 27, 28, 29) geschrumpft ist.

5. Sitz (1) nach Anspruch 1 bis 3, **dadurch gekennzeichnet, dass** der Füllfaden (21) aus einem bei einer Wärmebehandlung um 10% bis 80%, vorzugsweise um 20% bis 80% schrumpfenden Garn besteht und der Füllfaden (21) im Polsterbereich (6, 27, 28, 29) geschrumpft ist.

6. Sitz (1) nach einem der Ansprüche 1 bis 5, **dadurch gekennzeichnet, dass** die dem Benutzer zugewandte Gestricklage (C) des Bezuges (2) im Polsterbereich (6, 27, 28, 29) im Vergleich zu der dem Benutzer abgewandten Gestricklage (D) eine höhere Elastizität aufweist, und/oder, dass der Bezug (2) im Polsterbereich (6, 27, 28, 29) mindestens einen zusätzlichen, während des Strickens zugeführten Abstandsfaden (30) aufweist.

7. Sitz (1) nach einem der Ansprüche 1 bis 6, **dadurch gekennzeichnet, dass** die dem Benutzer zugewandte Gestricklage (C) des Bezuges (2) zumindest im Polsterbereich (6, 27, 28, 29) mit abwaschbarem Garn gestrickt ist, wobei insbesondere die Anzahl der Filamente des abwaschbaren Garns f1 bis f300, vorzugsweise f1 bis f10 beträgt.

8. Sitz (1) nach einem der Ansprüche 1 bis 7, **dadurch gekennzeichnet, dass** der Träger (8) des Sitzes (1) mindestens einen Rahmen umfasst, wobei der oder die Rahmen Rohre (12 - 17) oder Profile aufweist, mit denen der Bezug (2) verbunden ist.

9. Sitz (1) nach Anspruch 8, **dadurch gekennzeichnet, dass** durch die Rohre (12 - 17) oder die Profile Befestigungselemente gebildet sind.

10. Sitz (1) nach Anspruch 8, **dadurch gekennzeichnet, dass** die Profile als Kederleisten (31) ausgebildet sind und durch mindestens eine Kederseele (32) ein Befestigungselement gebildet ist.

11. Sitz (1) nach Anspruch 9 oder 10, **dadurch gekennzeichnet, dass** sich die zwei Gestricklagen (C, D) über die Vorderseite und Rückseite des Bezuges (2) erstrecken, wobei die zwei Gestricklagen (C, D) an Rändern des Bezuges (2) durch dritte Verbindungsstellen (23) und/oder vierte Verbindungsstellen (25) miteinander verbunden sind, wobei die zwei Gestricklagen (C, D) an den Rändern des Bezuges (2) jeweils innerhalb mindestens eines Aufnahmebereiches (24, 26) frei von Verbindungsstellen gebildet sind und wobei in dem oder den Aufnahmebereichen (24, 26) mindestens ein Befestigungselement zur Befestigung des Bezuges (2) an dem Träger (8) angeordnet ist.

12. Bezug (2) für einen Sitz, der mindestens einen Bereich mit zwei Lagen aufweist, wobei der Bereich durch Verbindungen zwischen den zwei Lagen endet, wobei der Bezug (2) ein Gestrick ist, wobei mindestens ein Bereich des Bezuges (2) mit zwei Gestricklagen (C, D) ausgebildet ist, wobei die Verbindungen, an denen der Bereich endet, als Verbindungsstellen an Strickreihen zwischen den zwei Gestricklagen (C, D) gestrickt sind, wobei der Bezug (2) in dem Bereich zwischen den zwei Gestricklagen (C, D) mindestens einen zusätzlichen Füllfaden (21) aufweist, **dadurch gekennzeichnet, dass** der Bereich als ein Polsterbereich (6, 27, 28, 29) ausgebildet ist, wobei die Verbindungsstellen, an denen der Polsterbereich (6, 27, 28, 29) an seinen seitlichen Rändern endet, als erste Verbindungsstellen (20) gestrickt sind, wobei der Bezug (2) im Polsterbereich (6, 27, 28, 29) den Füllfaden (21) aufweist, wobei der Füllfaden (21) während des Strickens zugeführt ist und an den ersten Verbindungsstellen (20) gehalten ist.

13. Bezug (2) nach Anspruch 12, **dadurch gekennzeichnet, dass** der Füllfaden (21) im Polsterbereich (6, 27, 28, 29) ausschließlich an den ersten Verbindungsstellen (20) gehalten ist, und/oder, dass sich der Füllfaden (21) im Polsterbereich (6, 27, 28, 29) ausschließlich zwischen den ersten Verbindungsstellen (20) erstreckt.

14. Verfahren zur Herstellung eines Bezuges (2) für einen Sitz (1) der mindestens einen Bereich mit zwei Lagen aufweist, wobei der Bereich durch Verbindungen zwischen den zwei Lagen endet, wobei der Bezug (2) als ein Gestrick hergestellt wird, wobei zwei Gestricklagen (C, D) gestrickt werden, wobei mindestens ein Bereich mit den zwei Gestricklagen (C, D) ausgebildet wird, wobei die Verbindungen, an denen der Bereich an seinen seitlichen Rändern endet, als Verbindungsstellen an Strickreihen zwischen den zwei Gestricklagen (C, D) gestrickt werden, wobei der Bezug (2) in dem Bereich zwischen den zwei Gestricklagen (C, D) mindestens einen zusätzlichen Füllfaden (21) aufweist, **dadurch gekennzeichnet, dass** der Bereich des Bezuges (2) als ein Polsterbereich (6, 27, 28, 29) ausgebildet wird, wobei die Verbindungsstellen, an denen der Polsterbereich (6, 27, 28, 29) an seinen seitlichen Rändern endet, als erste Verbindungsstellen (20) gestrickt werden, wobei der Bezug (2) in dem Polsterbereich (6, 27, 28, 29) den Füllfaden (21) aufweist, wobei der Füllfaden (21) während des Strickens zugeführt wird und an den ersten Verbindungsstellen (20) gehalten wird.

15. Verfahren nach Anspruch 14, **dadurch gekennzeichnet, dass** der Füllfaden (21) im Polsterbereich (6, 27, 28, 29) ausschließlich an den ersten Verbindungsstellen (20) gehalten wird, und/oder, dass sich der Füllfaden (21) im Polsterbereich (6, 27, 28, 29) ausschließlich zwischen den ersten Verbindungsstellen (20) erstreckt.
